# FASCICULE DE BREVET EUROPEEN

(11) **EP 1 095 802 B1**
(45) Date de publication et mention de la délivrance du brevet: **27.08.2008**
(21) Numéro de dépôt: 00122590.3
(22) Date de dépôt: 17.10.2000
(51) Int. Cl.: B60H 1/00

(54) **Dispositif de distribution d'un flux d'air dans une installation de ventilation, chauffage et/ou climatisation d'un véhicule automobile**
Luftsteueranordnung für eine Ventilation, Heizung und/oder Klimaanlage eines Kraftfahrzeugs
Air flow distribution device for a ventilation, heating and/or air conditioning installation of a vehicle

(30) Priorité: 27.10.1999 FR 9913450
(43) Date de publication de la demande: 02.05.2001
(73) Titulaire: VALEO SYSTEMES THERMIQUES, 78321 Le Mesnil St Denis Cedex (FR)
(72) Inventeur: Dubois, Christian, 78610 Le Perray en Yvelines (FR); Pierres, Philippe, 78310 Maurepas (FR)
(74) Mandataire: Léveillé, Christophe

(56) Documents cités:
- DE-A- 19 733 052
- DE-A- 19 753 617
- PATENT ABSTRACTS OF JAPAN vol. 1999, no. 03, 31 mars 1999 (1999-03-31) & JP 10 315744 A (CALSONIC CORP), 2 décembre 1998 (1998-12-02)
- PATENT ABSTRACTS OF JAPAN vol. 009, no. 194 (M-403), 10 août 1985 (1985-08-10) & JP 60 060026 A (NISSAN JIDOSHA KK), 6 avril 1985 (1985-04-06)

## Description

L'invention concerne un dispositif de distribution d'un flux d'air dans une installation de ventilation, chauffage et/ou climatisation d'un habitacle de véhicule automobile.

Elle concerne plus particulièrement un dispositif comprenant un volet monté à rotation dans un boîtier muni d'une première et d'une seconde fenêtre communiquant avec des premier et second conduits, respectivement. Ce boîtier comprend par ailleurs une ouverture communiquant avec un troisième conduit. Le volet, dont l'axe de rotation est distant des fenêtres précitées, peut obturer sélectivement la première ou la seconde fenêtre en vue de faire circuler un flux d'air entre le troisième conduit et la seconde ou la première fenêtre.

Une cloison est formée dans le fond du boîtier et munie d'au moins une ouverture pour la communication avec le troisième conduit.

Dans les dispositifs de ce type, connus, le volet repose sur une paroi du boîtier, généralement munie d'une ouverture pour la communication avec le troisième conduit précité, ce qui entraîne un frottement du volet contre cette paroi et, le cas échéant, une détérioration du volet et/ou de la paroi. Le document JP 10315744, qui est considéré comme l'art antérieur le plus proche, décrit un tel dispositif.

La présente invention vient améliorer la situation.

Selon une définition générale de l'invention, le dispositif comprend en outre des moyens de support du volet disposés dans ledit boîtier et formés d'une pluralité de branches en étoile en partant sensiblement d'un point de l'axe de rotation du volet et comportant chacune une extrémité en contact avec la cloison précitée.

Préférentiellement, les moyens de support sont réalisés sous la forme d'un trépied reposant sur la cloison et comportant une partie centrale munie d'un évidement propre à loger à rotation un axe du volet.

Avantageusement, les branches précitées présentent, dans une vue en coupe transversale et en regard du volet, un profil sensiblement convexe, préférentiellement en forme de U, ce qui permet d'éviter des perturbations du flux d'air circulant dans le boîtier.

Dans une réalisation préférée de l'invention, le boîtier est réalisé au moins en partie sous la forme générale d'un cylindre creux, muni des première et seconde fenêtres, tandis que la cloison précitée forme une base du cylindre. Le volet précité est alors un volet tambour, réalisé sous la forme générale d'une portion de cylindre creux. Son axe général et son axe de rotation sont, de préférence, sensiblement parallèles à l'axe du boîtier.

Le terme "cylindre" est à prendre ici au sens large et concerne ainsi toute surface engendrée par la rotation d'une courbe génératrice autour de l'axe du cylindre. Il s'applique donc aussi bien à un cylindre droit qu'à un cône ou encore une sphère.

Dans une première forme de réalisation, l'axe de rotation du volet est distant de l'axe de la portion de cylindre formant le volet, ce qui permet de fermer à étanchéité les fenêtres précitées.

En variante ou en complément de la première forme de réalisation ci-avant, le volet comporte, selon une seconde forme de réalisation, au moins une paroi sur une extrémité latérale de la portion de cylindre, qui s'étend vers l'extérieur de la portion, de préférence sensiblement dans le prolongement d'un rayon de la portion.

En variante ou en complément de l'une des première et seconde formes de réalisation ci-avant, l'une des fenêtres du boîtier présente une forme générale de trapèze tandis que ledit volet présente une forme homologue.

D'autres caractéristiques et avantages de l'invention apparaîtront à l'examen de la description détaillée ci-après, et des dessins annexés sur lesquels :
- la figure 1 représente un dispositif comportant, selon l'invention, des moyens de support pour un volet 2, en vue d'une distribution, dans l'exemple décrit, d'air extérieur et d'air recirculé dans l'habitacle d'un véhicule automobile ;
- la figure 2 représente une vue en coupe d'une branche des moyens de support précités, selon la ligne II-II de la figure 1 ;
- les figures 3A et 3B représentent le volet 2 du dispositif de distribution selon l'invention représenté sur la figure 1;
- la figure 4 représente une vue en coupe transversale du dispositif de distribution, selon une première forme de réalisation ;
- la figure 5 représente une vue en coupe transversale du dispositif de distribution, selon une seconde forme de réalisation ;
- la figure 6 représente une vue en coupe transversale du dispositif de distribution, selon une troisième forme de réalisation ; et
- la figure 7 représente une vue en coupe longitudinale du dispositif de distribution selon une variante.

Les dessins contiennent, pour l'essentiel, des éléments de caractère certain. Ils pourront donc non seulement servir à mieux faire comprendre la description, mais aussi contribuer à la définition de l'invention, le cas échéant.

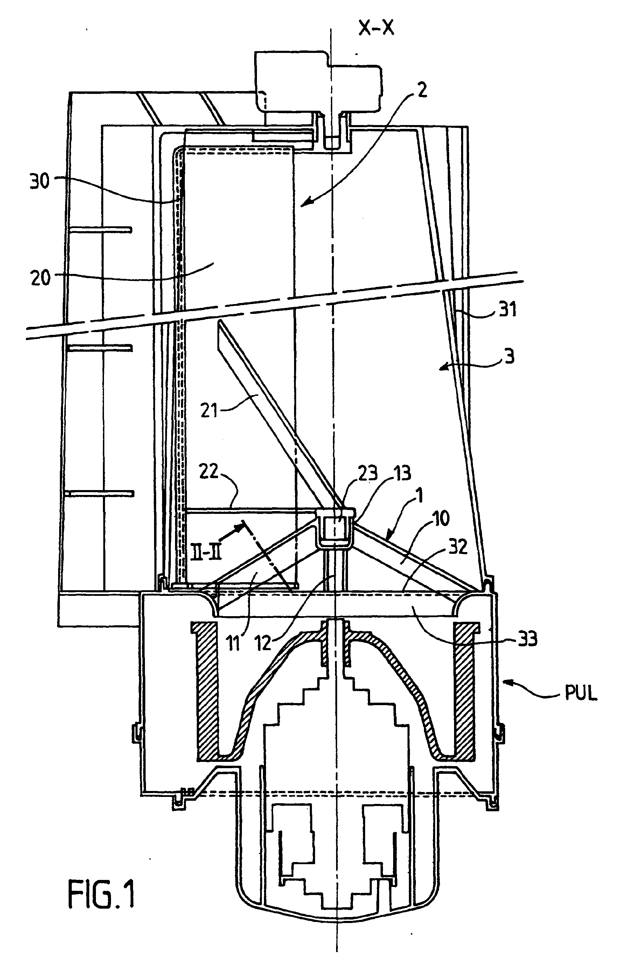

On se réfère tout d'abord à la figure 1 pour décrire un dispositif de distribution d'un flux d'air d'une installation de ventilation, chauffage et/ou climatisation de l'habitacle d'un véhicule automobile, selon l'invention.

Le dispositif comporte un boîtier 3 de forme générale sensiblement cylindrique creuse et comportant des ouvertures (ou fenêtres) 30 et 31 qui communiquent respectivement avec des conduits d'entrée d'air extérieur et d'air recirculé (issu initialement de l'habitacle). Le boîtier 3 comporte, sensiblement à la base du cylindre, une cloison 32 munie d'une ouverture 33 et formant une virole déflectrice communiquant avec un conduit d'aération de l'habitacle du véhicule (non représenté).

Le boîtier 3 loge à rotation un volet 2, autour de l'axe x-x, sensiblement parallèle à l'axe du cylindre que forme le boîtier 3. Le volet 2 est un volet tambour comportant une portion de cylindre creux 20 qui peut pivoter autour de l'axe X-X pour être en regard des ouvertures 30 et 31 du boîtier 3, en vue de leur fermeture ou de leur ouverture.

Ainsi, la position angulaire du volet 2 permet de gérer la proportion de flux d'air extérieur ou de flux d'air recirculé qu'admet le boîtier 3 pour l'alimentation de l'habitacle. En pratique, l'air admis dans le boîtier 3 est acheminé dans un bloc de ventilation muni d'un pulseur PUL, pour être ensuite évacué vers le conduit d'aération de l'habitacle précité.

Habituellement, des volets tambour pour une telle distribution comportent une paroi tambour 20 qui s'étend sensiblement sur toute la longueur que forme le boîtier 3. Ainsi, le volet 2 en rotation racle la cloison 32 de la virole déflectrice précitée, ce qui conduit à un état d'usure de la virole et/ou du volet.

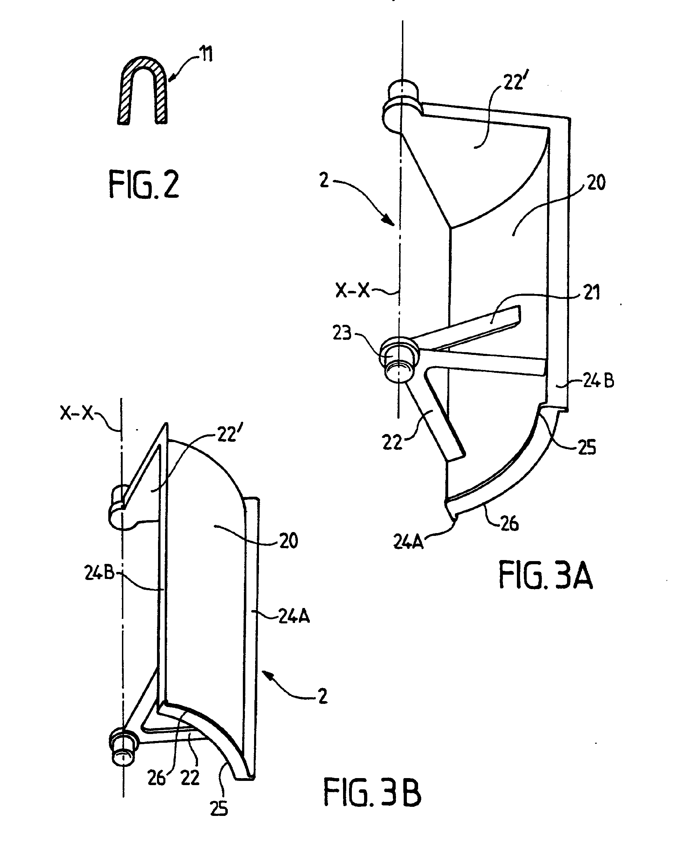

Dans le dispositif de distribution selon l'invention, Il est prévu des moyens de support 1 du volet 2 dans le boîtier 3. Ainsi, le volet 2 s'étend sur une partie seulement de la hauteur du boîtier 3 en laissant un interstice entre la portion de cylindre du volet et la virole déflectrice dans le fond du boîtier. Ces moyens de support sont préférentiellement réalisés sous la forme d'un trépied à trois branches 10, 11 et 12 qui s'étendent d'une partie centrale 13 que traverse l'axe de rotation X-X du volet 2. Les extrémités de ces trois branches reposent sur la cloison 32 de la virole déflectrice 33.
Le volet 2 comporte, quant à lui, une nervure de renfort et de rigidification réalisée sous la forme d'une attelle 21, ainsi qu'un flasque ouvert 22 (figures 3A et 3B), qui sont solidaires de la portion de cylindre 20 et qui se rejoignent sur l'axe X-X en une partie centrale munie d'un pion 23, formant un axe du volet 2 et destiné à être logé à rotation dans un évidement formé dans la partie centrale 13 du trépied 1.

En se référant à la figure 2, les branches 10, 11 et 12 du trépied 1 sont avantageusement en forme de U renversé, ce qui permet d'éviter des perturbations du flux d'air qui circule dans le boîtier 3 en direction du pulseur PUL.

Le volet 2 est formé d'une portion de cylindre 20, d'axe parallèle à l'axe de rotation X-X, entre deux flasques 22 et 22' (figures 3A et 3B). Avantageusement le flasque 22 est ouvert pour laisser passer le flux dans le boîtier 3. L'attelle 21 peut avantageusement être de section en U renversé pour éviter de perturber le flux d'air circulant dans le boîtier. Le volet 2 comporte, de part et d'autre de la portion de cylindre 20, deux parois latérales 24A et 24B, dans le prolongement d'un rayon s'étendant de l'axe X-X vers la surface extérieure de la portion de cylindre 20. Comme on le verra plus loin, ces parois 24A et 24B contribuent à un accostage étanche du volet contre les fenêtres 30 et 31 de communication du boîtier 3 avec les conduits d'air extérieur et d'air recirculé. La portion de cylindre du volet comporte en outre des pans inclinés 25 et 26 pour favoriser l'étanchéité précitée contre les fenêtres du boîtier 3.

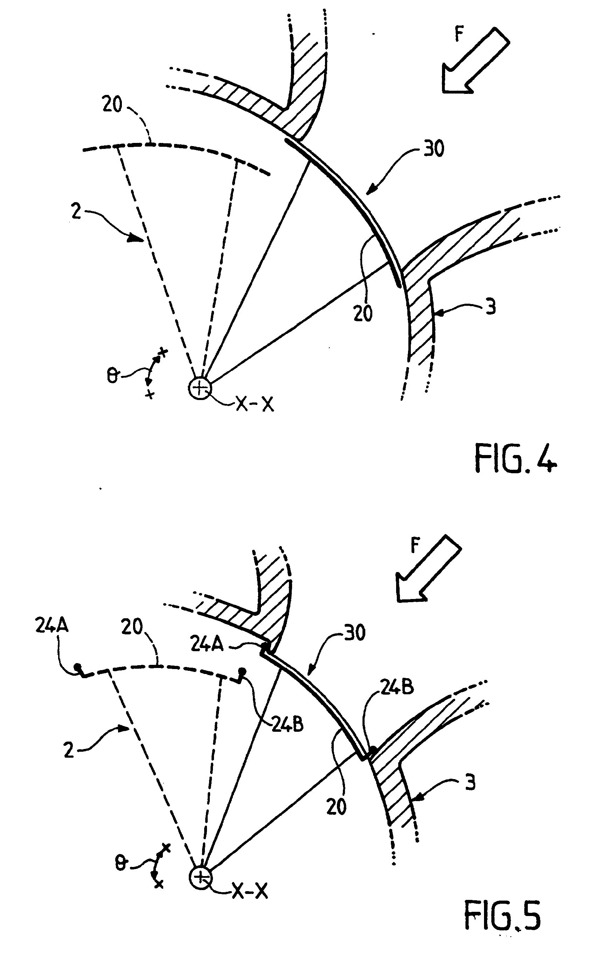

Selon une première forme de réalisation d'un dispositif de distribution selon l'invention, le volet 2 comporte une portion de cylindre dont l'axe est décalé par rapport à son axe de rotation X-X. La référence θ sur la figure 4 désigne la course angulaire de l'axe de la portion de cylindre 20 du volet entre une position d'ouverture (représenté en trait pointillé) et une position de fermeture de la fenêtre 30 du boîtier 3. Ainsi, la portion de cylindre 20, d'axe décalé par rapport à l'axe de rotation X-X du volet 22, vient fermer de façon étanche la fenêtre 30, en venant en appui contre les parois qui délimitent la fenêtre 30.

Le second mode de réalisation précité consiste en une variante plus élaborée du premier mode de réalisation représenté sur la figure 4. En se référant à la figure 5, le volet 2 comporte, de part et d'autre de la portion de cylindre 20, des parois 24A et 24B qui s'étendent vers l'extérieur de la portion de cylindre, en venant au contact des parois qui délimitent la fenêtre 30 du boîtier 3.

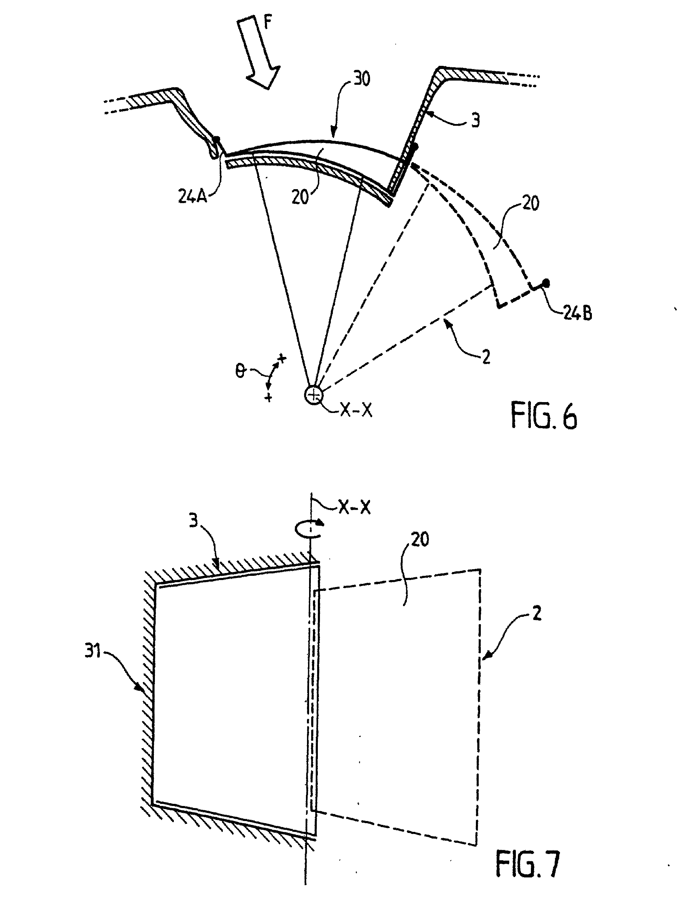

En se référant à la figure 6, le volet 2 comporte, selon une troisième forme de réalisation, une portion de cylindre 20 de forme sensiblement en trapèze (figure 7) pour s'emboîter dans une ouverture de forme homologue 31 aménagée dans le boîtier 3, pour la communication avec l'un des conduits d'air extérieur ou d'air recirculé. Une telle forme de la portion de cylindre 20 permet d'obtenir avantageusement une fermeture étanche de la communication 31 avec le conduit d'air recirculé, en particulier.

Avantageusement, ce dernier mode de réalisation peut être combiné aux modes précédents pour les fermetures étanches des conduits d'air extérieur et d'air recirculé, à la fois. Il peut être prévu sur les parois délimitant les ouvertures 30 et 31 une mousse ou une lèvre surmoulée pour favoriser l'étanchéité décrite ci-avant.

Ainsi, les moyens de support 1 du volet 2 permettent, selon l'un des avantages majeurs que procurent la présente invention, de surélever sensiblement le volet dans le boîtier 3, ce qui permet de prévoir un volet 2 dont la portion de cylindre 20 peut être de forme choisie pour fermer de façon étanche les fenêtres de communication 30 et 31 du boîtier 3.

Bien entendu, la présente invention ne se limite pas à la forme de réalisation décrite ci-avant à titre d'exemple ; elle s'étend à d'autres variantes.

Ainsi, on comprendra que le trépied représenté sur la figure 1 peut comprendre un nombre de branches différent de trois, par exemple un nombre supérieur à trois.

La forme en U des branches du trépied représenté sur la figure 2 ci-avant est donnée à titre d'exemple. Bien qu'avantageuse, la forme en coupe des branches peut être différente.

Dans les exemples représentés sur les figures, le boîtier, ainsi que le volet logé dans le boîtier, présentent des formes générales cylindriques droites, creuses. Dans une variante, ces formes sont coniques creuses ou encore sphériques creuses, le volet conservant une forme sensiblement homologue de celle du boîtier.

La présente invention trouve une application intéressante à la répartition de flux d'air extérieur et flux d'air recirculé dans un boîtier de distribution communiquant avec un conduit d'alimentation d'un habitacle de véhicule automobile. Elle trouve cependant d'autres applications, notamment à une chambre de mixage d'une installation de ventilation, chauffage et/ou climatisation de l'habitacle d'un tel véhicule, par exemple dans un dispositif comprenant un boîtier logeant à rotation un volet de mixage en amont de la chambre de mixage.

Elle trouve une autre application intéressante pour la répartition de la distribution d'air dans l'habitacle, par exemple entre une aération basse, une aération centrale et une aération du pare-brise du véhicule.

Par ailleurs, le boîtier décrit dans l'exemple ci-avant ne comporte qu'une ouverture 33 aménagée dans sa base. Il peut cependant être prévu une ou plusieurs ouvertures aménagées dans le boîtier, suivant l'application visée. De même, les fenêtres décrites ci-avant constituent des entrées d'air, tandis que l'ouverture 33 forme la sortie d'air du boîtier. Dans une variante, l'ouverture peut former l'entrée d'air et les fenêtres précitées, des sorties d'air. Par ailleurs, il peut être prévu un boîtier muni de plus de deux fenêtres, formant par exemple des sorties d'air, s'il est souhaité d'alimenter plusieurs conduite à la fois. Il est à noter que le terme de "conduits" (avec lesquels communiquent les entrées/sorties du boîtier) est à prendre ici au sens large. Il concerne aussi bien un espace délimité par des cloisons étanches, qu'une ouverture pour une entrée d'air extérieur, par exemple, ou encore une chambre de mixage, communiquant elle-même avec d'autres conduits.

## Revendications

1. Dispositif de distribution d'un flux d'air d'une installation comprenant au moins un premier conduit, un deuxième conduit et un troisième conduit, notamment d'une installation de ventilation, chauffage et/ou climatisation de l'habitacle d'un véhicule automobile, comprenant un boîtier (3) muni d'au moins une première et une seconde fenêtre (30,31), propres à communiquer respectivement avec le premier et le second conduit de l'installation, ainsi qu'un volet (2) monté dans le boîtier, à rotation autour d'un axe (X-X) distant desdites fenêtres, et agencé pour obturer sélectivement la première ou la seconde fenêtre (30, 31) en vue de faire circuler un flux d'air (F) entre le troisième conduit et le premier ou le second conduit, respectivement, et une cloison (32) formée dans le fond du boîtier (3) et munie d'au moins une ouverture (33) propre à communiquer avec le troisième conduit de l'installation,
**caractérisé en ce qu'**il comporte des moyens de support (1) dudit volet (2) disposés dans le boîtier (3) et formés d'une pluralité de branches (10,11,12) en étoile en partant sensiblement d'un point (13) de l'axe de rotation du volet et comportant chacune une extrémité en contact avec ladite cloison (32).

2. Dispositif selon la revendication 1, **caractérisé en ce que** lesdits moyens de support sont réalisés sous la forme d'un trépied (1) reposant sur ladite cloison (32) et comportant une partie centrale (13) munie d'un évidement propre à loger à rotation un axe (23) du volet (2).

3. Dispositif selon l'une des revendications 1 et 2, **caractérisé en ce que** lesdites branches (10,11,12) présentent, dans une vue en coupe transversale, un profil sensiblement convexe, en regard du volet (2).

4. Dispositif selon la revendication 3, **caractérisé en ce que** les branches (10,11,12) présentent un profil en forme de U.

5. Dispositif selon l'une des revendications précédentes, **caractérisé en ce que** le boîtier (3) est réalisé au moins en partie sous la forme générale d'un cylindre creux, muni desdites première et seconde fenêtres (30,31), tandis que ladite cloison (32) forme une base du cylindre.

6. Dispositif selon la revendication 5, **caractérisé en ce que** ledit volet (2) est un volet tambour d'axe de rotation (X-X) sensiblement parallèle à l'axe du boîtier, réalisé sous la forme générale d'une portion de cylindre creux (20), d'axe (θ) sensiblement parallèle à l'axe du boîtier.

7. Dispositif selon la revendication 6, **caractérisé en ce que** l'axe de rotation du volet (X-X) est distant de l'axe (θ) de la portion de cylindre (20) du volet, ce qui permet de fermer à étanchéité lesdites première et seconde fenêtres (30,31).

8. Dispositif selon l'une des revendications 5 à 7, **caractérisé en ce que** le volet (2) comporte, sur une extrémité latérale de la portion de cylindre (20), au moins une paroi (24A) s'étendant vers l'extérieur de ladite portion (20), de préférence sensiblement dans le prolongement d'un rayon de la portion (20).

9. Dispositif selon l'une des revendications 5 à 8, **caractérisé en ce que** l'une au moins des fenêtres (31) du boîtier présente une forme générale de trapèze tandis que ledit volet (2) présente une forme homologue.

10. Dispositif selon l'une des revendications précédentes, **caractérisé en ce que** les première (30) et seconde (31) fenêtres sont agencées respectivement pour admettre un flux d'air extérieur et un flux d'air recirculé, tandis que ladite ouverture (33) est agencée pour communiquer avec le troisième conduit en vue de laisser passer un flux d'air (F) extérieur ou recirculé dans le troisième conduit.

## Claims

1. Air flow distribution device of a system including at least a first canal, a second canal and a third canal, in particular for a ventilation, heating and/or air conditioning system for the car interior, including a housing (3) equipped with at least one first and one second window (30, 31), suitable for communicating respectively with the first and second canals of the system, as well as a flap (2) mounted in the housing, rotating about an axis (X-X) distant from said windows, and arranged so as to selectively close the first or the second window (30, 31) in order to cause an air flow (F) to circulate between the third canal and the first or the second canal, respectively, and a partition (32) formed in the base of the housing (3) and equipped with at least one opening (33) suitable for communicating with the third canal of the system, **characterized in that** it comprises means (1) for supporting said flap (2) arranged in the housing (3) and formed by a plurality of branches (10, 11, 12) forming a star shape starting substantially from a point (13) of the axis of rotation of the flap and each comprising an end in contact with said partition (32).

2. Device according to claim 1, **characterized in that** said support means are made in the form of a tripod (1) resting on said partition (32) and comprising a central portion (13) equipped with a recess suitable for rotatably housing an axle (23) of the flap (2).

3. Device according to one of claims 1 and 2, **characterized in that** said branches (10, 11, 12) have, in a transverse cross section, a substantially convex profile, opposite the flap (2).

4. Device according to claim 3, **characterized in that** the branches (10, 11, 12) have a U-shaped profile.

5. Device according to one of the previous claims, **characterized in that** the housing (3) is made at least partially in the general shape of a hollow cylinder, equipped with said first and second windows (30, 31), while said partition (32) forms a base of the cylinder.

6. Device according to claim 5, **characterized in that** said flap (2) is a drum flap with an axis of rotation (X-X) substantially parallel to the axis of the housing, made in the general shape of a hollow cylinder portion (20), with an axis (θ) substantially parallel to the axis of the housing.

7. Device according to claim 6, **characterized in that** the axis of rotation of the flap (X-X) is distant from the axis (θ) of the cylinder portion (20) of the flap, which makes it possible to tightly close said first and second windows (30, 31).

8. Device according to one of claims 5 to 7, **characterized in that** the flap (2) comprises, on a lateral end of the cylinder portion (20), at least one wall (24A) extending toward the outside of said portion (20), preferably substantially in the extension of a radius of the portion (20).

9. Device according to one of claims 5 to 8, **characterized in that** at least one of the windows (31) of the housing has a general trapezoid shape while said flap (2) has a complementary shape.

10. Device according to one of the previous claims, **characterized in that** the first (30) and second (31) windows are respectively arranged to take in an external air flow and a recirculated air flow, while said opening (33) is arranged to communicate with the third canal in order to allow an external or recirculated air flow to pass (F) in the third canal.

## Patentansprüche

1. Vorrichtung zur Verteilung des Luftstroms einer Installation, umfassend mindestens eine erste Leitung, eine zweite Leitung und eine dritte Leitung, insbesondere einer Installation zur Belüftung, Heizung und / oder Klimatisierung des Innenraums eines Kraftfahrzeuges, umfassend ein Gehäuse (3), ausgestattet mit mindestens einem ersten und einem zweiten Fenster (30, 31), die dazu geeignet sind, mit der ersten bzw. der zweiten Leitung der Installation zu kommunizieren, sowie eine Klappe (2), die in das Gehäuse eingebaut ist und sich um eine Achse (X-X) dreht, die von den Fenstern entfernt ist, und so angeordnet ist, dass sie wahlweise das erste oder das zweite Fenster (30, 31) verschließt, um einen Luftstrom (F) zwischen der dritten Leitung und der ersten bzw. zweiten Leitung zirkulieren zu lassen, und eine Trennwand (32), die am Boden des Gehäuses (3) gebildet ist und mindestens mit einer Öffnung (33) ausgestattet ist, die dazu geeignet ist, mit der dritten Leitung der Installation zu kommunizieren, **dadurch gekennzeichnet, dass** sie über Trägermittel (1) der Klappe (2) verfügt, die im Gehäuse (3) angebracht sind und aus einer Mehrzahl von Abzweigungen (10, 11, 12) in Sternform gebildet sind, da sie im Wesentlichen von einem Punkt (13) der Rotationsachse der Klappe ausgehen und jeweils ein Ende in Kontakt mit der Trennwand (32) aufweisen.

2. Vorrichtung nach Anspruch 1, **dadurch gekennzeichnet, dass** die Trägermittel in Form eines Dreifusses (1) ausgeführt sind, der auf der Trennwand (32) ruht und einen Mittelbereich (13) aufweist, der mit eine Aussparung ausgestattet ist, die dazu geeignet ist, in Drehung eine Achse (23) der Klappe (2) aufzunehmen.

3. Vorrichtung nach einem der Ansprüche 1 und 2, **dadurch gekennzeichnet, dass** die Abzweigungen (10, 11, 12) in einer Querschnittsansicht ein im Wesentlichen konvexes Profil gegenüber der Klappe (2) aufweisen.

4. Vorrichtung nach Anspruch 3, **dadurch gekennzeichnet, dass** die Abzweigungen (10, 11, 12) ein U-Profil aufweisen.

5. Vorrichtung nach einem der vorherigen Ansprüche, **dadurch gekennzeichnet, dass** das Gehäuse (3) mindestens teilweise die allgemeine Form einer hohlen Zylinders aufweist, ausgestattet mit dem ersten und zweiten Fenster (30, 31), während die Trennwand (32) eine Basis des Zylinders bildet.

6. Vorrichtung nach Anspruch 5, **dadurch gekennzeichnet, dass** die Klappe (2) eine Trommelklappe mit Rotationsachse (X-X) ist, im Wesentlichen parallel zur Achse des Gehäuses, ausgeführt in der allgemeinen Form eines Abschnitts des hohlen Zylinders (20), mit einer Achse (θ), die im Wesentlichen parallel zur Achse des Gehäuses ist.

7. Vorrichtung nach Anspruch 6, **dadurch gekennzeichnet, dass** die Rotationsachse der Klappe (X-X) von der Achse (θ) des Zylinderabschnittes (20) der Klappe entfernt ist, wodurch es möglich ist, das erste und zweite Fenster (30, 31) dicht zu schließen.

8. Vorrichtung nach einem der Ansprüche 5 bis 7, **dadurch gekennzeichnet, dass** die Klappe (2) auf einem seitlichen Ende des Zylinderabschnitts (20) wenigstens eine Wand (24A) aufweist, die sich zur Außenseite des Teils (20) erstreckt, vorzugsweise im Wesentlichen in der Verlängerung eines Radius des Teils (20).

9. Vorrichtung nach einem der Ansprüche 5 bis 8, **dadurch gekennzeichnet, dass** wenigstens eines der Fenster (31) des Gehäuses die allgemeine Form eines Trapezes aufweist, während die Klappe (2) eine homologe Form aufweist.

10. Vorrichtung nach einem der vorherigen Ansprüche, **dadurch gekennzeichnet, dass** das erste (30) bzw. das zweite (31) Fenster so angeordnet sind, dass sie einen Außenluftfluss und einen Umluftfluss aufnehmen, während die Öffnung (33) so angeordnet ist, dass sie mit der dritten Leitung kommunizieret, um einen Außen- oder Umluftfluss (F) eintreten zu lassen.
